# EUROPEAN PATENT APPLICATION

(11) **EP 0 652 667 A1**
(43) Date of publication of application: **10.05.1995**
(21) Application number: 94308069.7
(22) Date of filing: 02.11.1994
(51) Int. Cl.: H04N 1/327

(54) **A technique for transmitting facsimile communications with constant carrier modems**

(30) Priority: 10.11.1993 US 150640
(71) Applicant: AT&T Corp., New York, NY 10013-2412 (US)
(72) Inventor: Holmquist, Kurt Ervin, Largo, Florida 34643 (US); Patel, Mahendra, Brandon, Florida 33510 (US)
(74) Representative: Watts, Christopher Malcolm Kelway, Dr.

(57) **Abstract**

A switched carrier modulation simulator is provided which permits facsimile communications to be coupled by modems utilizing constant carrier modulation. In the transmit direction, the simulator detects control signals from a facsimile terminal device and inserts predetermined signals before and after each outgoing facsimile communication. In the receive direction, the simulator detects the presence of the predetermined signals in the incoming communications and couples control signals to the facsimile terminal device to ensure half duplex transmission.

## Description

### Technical Field

The present invention relates to modems used for facsimile communications and, more particularly, to a technique for transmitting such communications via continuous carrier modulation.

### Background of the Invention

For purposes of this application, the term "data" will refer to communications coupled through the telephone network via a modem other than facsimile messages and their associated control signals.

Data communications are typically in accordance with an internationally recognized standard, such as those promulgated by the C.C.I.T.T. For example, a large number of modems produced by different manufacturers conform to the "V.32" C.C.I.T.T. standard. This standard governs full duplex 9600 baud data transmission. While the current trend for data communications is full duplex operation, an earlier data standard, i.e., the V.13 standard for data communications, includes a provision for simulating half-duplex operation. In particular, a predetermined sequence is inserted before and after each data communication.

Facsimile communications generally conform to another collection of standards, such as V.17, V.21, V.27, and V.29. All modems compatible with these standards operate in a half-duplex manner and the exchange of signals between facsimile devices is well-defined.

It should be noted that, historically, the standards and techniques for facsimile communications evolved independently of those for data communications. It is not surprising, therefore, that the standards and techniques adopted for facsimile are very dissimilar from those for data communications.

A modem can be classified into one of two general types depending on its modulation arrangement. In constant carrier modulation, such as specified in the V.32 standard, carrier signal energy is continuously transmitted by each modem. In switched carrier modulation, a modem's carrier signal is switched off when the modem is not transmitting a facsimile communication. The presence or absence of incoming carrier signal energy is tracked by apparatus within the modem and a control signal, designated as "carrier detect" (CD) is provided. The ubiquitous Group 3 facsimile devices utilize the CD control signal and transmit signals only in the absence of incoming carrier signal energy.

While the current arrangements operate satisfactorily, it would be highly desirable if a technique were developed which permits a modem utilizing constant carrier modulation to be used for facsimile communications. This desire is heightened by the recent modems which communicate voice and data communications simultaneously in a non-multiplexed manner through a generally coextensive frequency band. See, for example, EP Patent Application 94304185.5.
Such a technique would permit the substitution of facsimile for data, as desired.

### Summary of the Invention

The present invention permits facsimile communications to be transmitted through modems utilizing constant carrier modulation. In accordance with the present invention, switched carrier operation is simulated by the transmission of a predetermined signal before and after each facsimile communication. Each modem monitors the received signal and detects these predetermined signals so as to provide an indication of the presence or absence of an incoming facsimile communication. In the disclosed embodiment, the control signal is compatible for use with current Group 3 compatible facsimile devices. Advantageously, the present invention can be readily implemented by the substitution of a constant carrier modulator/demodulator for the switched carrier counterpart in existing Group 3 facsimile device. In addition, the present invention permits constant carrier modems to communicate facsimile information between one another.

### Brief Description of the Drawing

FIG. 1 is a block-schematic diagram depicting an application of the present invention;
FIGS. 2-4 respectively are block schematic diagrams of facsimile machines, personal computer based facsimile devices and a constant carrier modem which are useful for understanding the present invention; and
FIG. 5 is a block-schematic diagram of an embodiment of the present invention disposed within a modem employing constant carrier modulation.

### Detailed Description

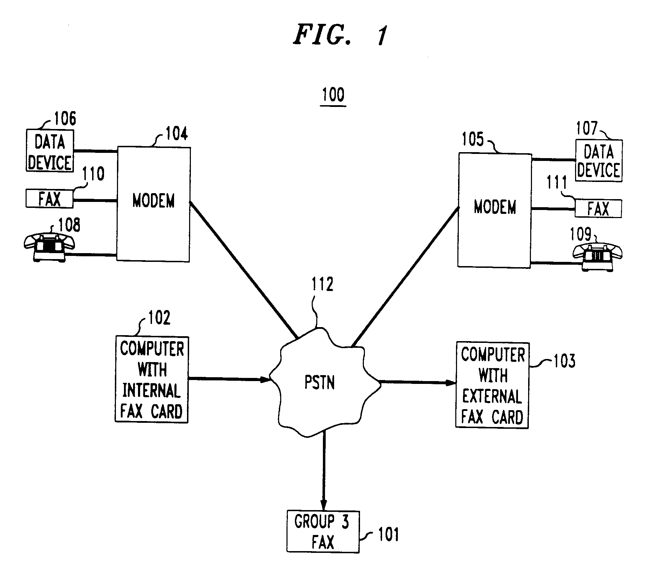

FIG. 1 shows an illustrative application 100 of the present invention wherein a conventional Group 3 facsimile (fax) device 101, computer 102 with an internal fax card, computer 103 having an external fax card 103, and modems 104 and 105 couple facsimile communications to one another via the public switched telephone network (PSTN) 112. Each of modems 104 and 105 can provide voice and data communications in a multiplexed or nonmultiplexed manner through a generally coextensive frequency band. Because of this capability, each of these modems respectively couple data from associated data devices 106 and 107 alone or in combination with voice signals from telephones 108 and 109. In addition, pursuant to the present invention, facsimile communications can be coupled from facsimile devices 110 and 111 in lieu of data at any time. Moreover, pursuant to the present invention, the modems are not limited to the utilization of switched carrier modulation for facsimile communications but can utilize constant carrier modulation. At this juncture, it should be understood that the present invention is not limited to coupling facsimile communications through a PSTN, but can be used to couple communications between any number of Group 3 compatible facsimile devices interconnected by public or private line networks which are switched or nonswitched. Advantageously, the present invention can be readily implemented within a modem and is compatible for use with all available facsimile device image encoding and transmission techniques as well as features, such as broadcast, automatic redial, etc.

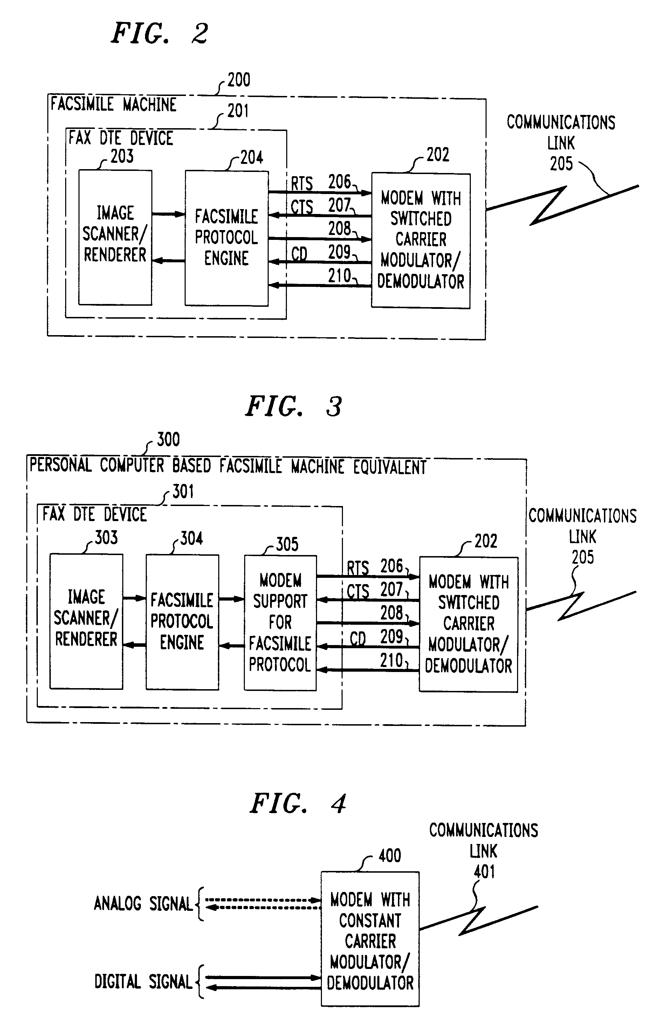

Refer now to FIGs. 2 and 3 which show two current devices of transmitting facsimile communications. A conventional facsimile machine 200 is shown in FIG. 2 connected to a communications link 205. Link 205 may be of a variety of types including, wire, optical fiber and/or wireless (cellular or noncellular). Machine 200 includes a fax data terminal equipment (DTE) device 201 and a modem 202. The latter utilizes switched carrier modulation. The DTE device may be divided into an image scanner/renderer portion 203 and a facsimile protocol engine portion 204. Portion 203 is an electromechanical device which as a scanner converts an image into a digital representation and as a renderer converts a received digital representation into an image. The fax protocol engine portion, for outgoing facsimile communications, converts the digital representation provided by the scanner into a format which can be reliably and efficiently transmitted through a communications network. This conversion involves the use of data compression/decompression and framing/formatting techniques. For incoming facsimile communication, the protocol engine works in an manner opposite to that just described so as to provide a digital representation which can be converted into an image by the renderer. The communications connection between the DTE device and modem includes leads 206-210. The Request-To-Send (RTS), Clear-to-Send (CTS), and Carrier Detect (CD) control signals are respectively coupled by leads 206, 207 and 209. The outgoing facsimile communications are coupled from DTE device 201 to the modem via lead 208 and coupled from the modem to the DTE device via lead 210.

FIG. 3 shows a personal computer based facsimile machine equivalent 300 including facsimile DTE device 301 and modem 202. All or a substantial portion of facsimile machine equivalent 300 is located within a personal computer. Image scanner/renderer 303 provides a similar function to its counterpart 203 in FIG. 2 except that in arrangement 300 the scanner and rendering is typically less electromechanical and more software oriented in personal computer based facsimile arrangements. The other difference is that the functions of the facsimile protocol engine 204 in FIG. 2 is divided between two elements in FIG 3., namely the facsimile protocol engine 304 and the modem support device 305. In both FIGs 2 and 3, the interface between the FAX DTE device and the modem is the same with the latter being of the switched carrier modulation type.

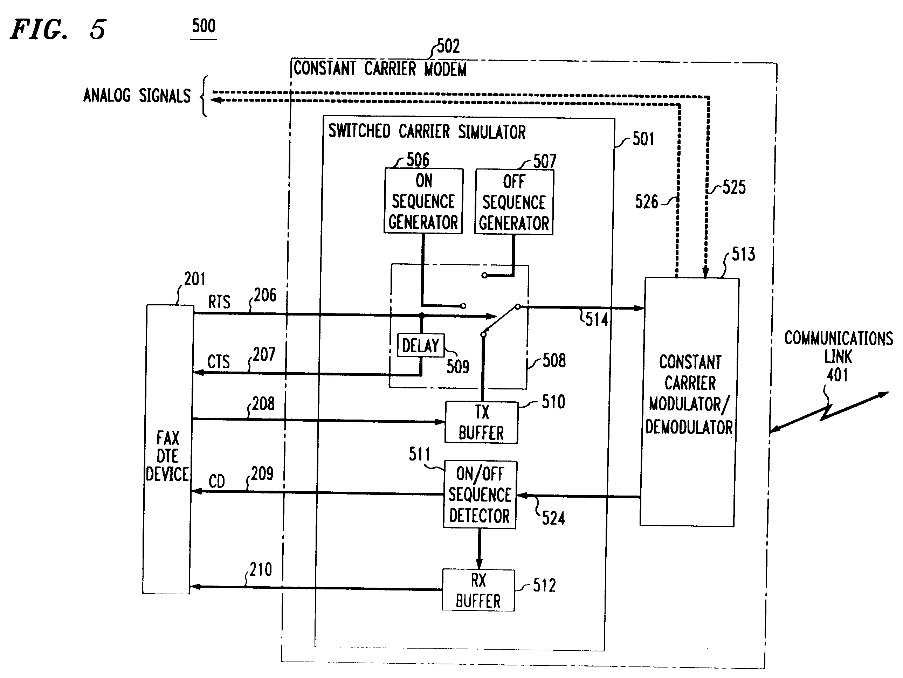

FIG. 4 shows an illustrative modem 400 for coupling digital data to and from communications link 401. Link 401 may include any of the variety of types described for link 205. In addition, since the present invention is limited to a particular facsimile format, it can be used in networks other than the PSTN. Modem 400 can also be of the type capable of simultaneously coupling an analog voice signal along with the digital data. In either event, it should be noted that modem 400, in contrast to facsimile modems, is of the constant carrier modulation type and this type of modulation has heretofore been unsuitable for communicating facsimile communications from a FAX DTE device. The reason for this incompatibility is that conventional FAX DTE devices rely on the control signals in the modem interface, and especially the CD control signal to control the half duplex communications between FAX DTE devices. It is one aim of the present invention to eliminate this incompatibility and provide an arrangement wherein constant carrier modulation can be utilized for facsimile communications in the arrangements of FIGs 2-4. This capability is provided, in accordance with the present invention, through the use of switched carrier modulation simulator which is disposed between a FAX DTE device, e.g.,201 or 301, and a constant carrier modem, e.g., 400.

FIG. 5 shows an embodiment 500 of the present invention wherein switched carrier modulation simulator 501 is disposed within constant carrier modem 502. This modem is connected between communications link 401 and FAX DTE device 201 or 301. Leads 206-210 collectively provide the interface between the FAX DTE device and the modem and each lead provides the same function as in FIGs 2 and 3. It is assumed that the far end of link 401 (not shown) is connected to one or more destinations and that a call connection has been established to these destinations.

Simulator 501 includes "on" sequence generator 506, "off" sequence generator 507, switch 508, delay element 509, and transmit (TX) buffer 510 operate with the transmit portion of the modem, to couple facsimile communications from the DTE device to the communications link. On/off sequence detector 511 and receive (RX) buffer 512 are incorporated into the receive portion of each modem to couple facsimile communications from link 401 to the FAX DTE device.

After call establishment, if FAX DTE device 201 or 301 desires to transmit a facsimile communication, it can only do so if the carrier detect (CD) control signal indicates the absence of a facsimile communication from link 401. Assuming this is so, either facsimile indicates its desire to transmit a facsimile communication by changing the state of the RTS control signal. This control signal, pursuant to the present invention controls the operation of switch 508. When facsimile transmission is desired, switch 508 couples a predetermined signal sequence from "on" sequence generator 506 to the constant carrier modulator/demodulator 513 via transmit lead 514. The RTS signal is coupled back to the FAX DTE device via delay element 509. This element provides a delay equal to the time duration of the "on" sequence. After this delay, switch 508 toggles to couple the contents of TX buffer 510 to line 514. Buffer 510 temporarily stores the facsimile information coupled from the FAX DTE device via lead 208. At the end of transmission of this information and prior to any command to terminate the call, switch 508 toggles to couple a predetermined sequence from "off" sequence generator 507. The sequences from generators 506 and 507 are different from one another and each is preferably a pseudorandom (PN) sequence. One such suitable sequence is that disclosed in the V.13 standard. As a result of the above operation, each packet of facsimile information from the FAX DTE device is respectively preceded and succeeded by the on and off sequences from generators 506 and 507. The on or off sequences are respectively transmitted after the signals which establish a call connection and prior to signals which effect a termination of the call connection.

In the receive portion of each modem, the incoming facsimile communication is coupled from the constant carrier modulator/demodulator 513 through receive lead 524 to on/off sequence detector 511. This detector has the ability to detect the appearance of the on and off sequence in the incoming facsimile and change the state of the carrier detect control signal in the manner expected by the FAX DTE device. As a result, the addition of the simulator 501 and constant carrier modulator/demodulator is transparent to FAX DTE device and each such device operates in existing half duplex fashion. Detector 511 also extracts each detected sequence from an incoming facsimile communication and passes only the facsimile communication to a FAX DTE device via RX buffer 512 and lead 210. Leads 525 and 526 show that the present invention can be incorporated within a modem capable of simultaneously communicating voice and data communications. In such cases, with the present invention, this constant carrier modem can couple facsimile communications in lieu of data communications.

It should, of course, be noted that while the present invention has been described in reference to an illustrative embodiment, other arrangements may be apparent to those of ordinary skill in the art. For example, while the disclosed embodiment utilizes discrete devices, these devices can be implemented using one or more appropriately programmed, general-purpose processors or special-purpose integrated circuits or digital processes or an analog of hybrid counterparts of any of these devices. Or, for example, while the circuitry disclosed operates in the baseband, other arrangements may be devised which operate in the passband.

## Claims

1. Apparatus for use in a communications system in which
a first facsimile device sends a facsimile communication to a second facsimile device, said apparatus CHARACTERIZED BY
means responsive to a first control signal for outputting first and second predetermined signals before and after said facsimile communication; and
modulation means responsive to said facsimile communication and said first and second predetermined signals for modulating these signals into one suitable for propagation on a communications link to said second facsimile device.

2. The apparatus of claim 1 CHARACTERIZED IN THAT said first and second predetermined signals are different from one another.

3. The apparatus of claim 1 CHARACTERIZED IN THAT said first and second predetermined signal are different signal sequences.

4. The apparatus of claim 3 CHARACTERIZED IN THAT the different signal sequences are each a pseudorandom sequence.

5. The apparatus of claim 1 CHARACTERIZED IN THAT said first control signal is a Request-To-Send signal.

6. The apparatus of claim 1 CHARACTERIZED IN THAT said outputting means also outputs a second control signal which is different than said first.

7. The apparatus of claim 6 CHARACTERIZED IN THAT said second control signal is a Clear-to-Send signal.

8. The apparatus of claim 1 CHARACTERIZED IN THAT said modulation means is also responsive to an analog signal and can modulate this signal simultaneously with said first and second predetermined signals and said facsimile communication.

9. The apparatus of claim 1 CHARACTERIZED IN THAT said apparatus is included within a facsimile machine.

10. The apparatus of claim 1 CHARACTERIZED IN THAT said apparatus is included within a personal computer.

11. A method for coupling a facsimile communication from a first facsimile device to a second facsimile device, said method CHARACTERIZED BY the steps of
outputting first and second predetermined signals before and after said facsimile communication in response to a first control signal; and
modulating said facsimile communication and said first and second predetermined signals into one suitable for propagation on a communication link to said second facsimile device.

12. Apparatus for use in connection with a facsimile device which receives a facsimile communication from another facsimile device, said apparatus CHARACTERIZED BY
means for receiving said facsimile communication, said communication comprising a facsimile message surrounded by first and second predetermined signals; and
means for detecting said first and second predetermined signals in said received facsimile communication and extracting the same from the received facsimile communication.

13. The apparatus of claim 12 CHARACTERIZED IN THAT said first and second predetermined signals are different from one another.

14. The apparatus of claim 12 CHARACTERIZED IN THAT said first and second predetermined signal are different signal sequences.

15. The apparatus of claim 14 CHARACTERIZED IN THAT the different signal sequences are each a pseudorandom sequence.

16. The apparatus of claim 12 further including means responsive to the detection of said first and second predetermined signals for outputting a control signal.

17. The apparatus of claim 16 CHARACTERIZED IN THAT said control signal is a carrier detect signal.

18. The apparatus of claim 12 CHARACTERIZED IN THAT said receiving means is also responsive to an analog signal and can receive this signal simultaneously with the first and second predetermined signals and facsimile communications.

19. The apparatus of claim 12 CHARACTERIZED IN THAT said apparatus is included within a facsimile machine.

20. The apparatus of claim 12 CHARACTERIZED IN THAT said apparatus is included within a personal computer.

21. A method for use in connection with a first facsimile device which receives a facsimile communication from another facsimile device, said method CHARACTERIZED BY the steps of
receiving said facsimile communication, said communication comprising a facsimile message surrounded by first and second predetermined signals; and
detecting said first and second predetermined signals in the received facsimile communication and extracting the same from said facsimile communication.
